(19) Europäisches Patentamt
European Patent Office
Office européen des brevets

(11) **EP 1 423 924 B1**

(12) **EUROPÄISCHE PATENTSCHRIFT**

(45) Veröffentlichungstag und Bekanntmachung des Hinweises auf die Patenterteilung:
**08.02.2012 Patentblatt 2012/06**

(21) Anmeldenummer: **02767442.3**

(22) Anmeldetag: **27.08.2002**

(51) Int Cl.:
**H04B 3/14** (2006.01)

(86) Internationale Anmeldenummer:
**PCT/EP2002/009559**

(87) Internationale Veröffentlichungsnummer:
**WO 2003/023989 (20.03.2003 Gazette 2003/12)**

(54) **ENTZERRERANORDNUNG**

EQUALIZER SYSTEM

DISPOSITIF D'EGALISATION

(84) Benannte Vertragsstaaten:
**AT BE BG CH CY CZ DE DK EE ES FI FR GB GR IE IT LI LU MC NL PT SE SK TR**

(30) Priorität: **07.09.2001 DE 10143933**

(43) Veröffentlichungstag der Anmeldung:
**02.06.2004 Patentblatt 2004/23**

(73) Patentinhaber: **Harman Becker Automotive Systems GmbH**
**76307 Karlsbad (DE)**

(72) Erfinder: **AZIZI, Seyed, Ali**
**72800 Eningen (DE)**

(74) Vertreter: **Schmuckermaier, Bernhard**
**Westphal, Mussgnug & Partner**
**Patentanwälte**
**Herzog-Wilhelm-Strasse 26**
**80331 München (DE)**

(56) Entgegenhaltungen:
**EP-A- 0 084 628    US-A- 5 841 810**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 423 924 B1

**Beschreibung**

Die Erfindung betrifft eine Entzerreranordnung zum Erzeugen eines Ausgangssignals durch Entzerren, eines Eingangssignals mit mindestens zwei miteinander verschalteten und miteinander interferierenden Entzerrern, die unterschiedliche Mittenfrequenzen aufweisen und deren verstärkungen bei den jeweiligen Mittenfrequenzen durch erste externe Steuersignale steuerbar sind, wobei das Eingangssignal abhängig von den externen Steuersignalen unter Steuerung einer Optimierungseinrichtung entzerrt wird.

Derartige Anordnungen sind beispielsweise aus der US 5,841,810 bekannt. Entzerreranordnungen wie beispielsweise Entzerrerbänke bestehen in der Regel aus einem Satz von Entzerrern (Equalizern), die in einer bestimmten Weise miteinander verschaltet sind unter Verwendung einer seriellen, parallelen oder irgendeiner anderen Struktur. Die einzelnen Entzerrer können dabei Anhebungsentzerrer (Presence Equalizer, Boost Equalizer) oder Absenkungsentzerrer (Absence Equalizer, Cut Equalizer) sein, d. h. Entzerrer mit einer Verstärkungsanhebung bzw. einer Verstärkungsabsenkung bei der jeweiligen Mittenfrequenz.

Die Entzerrer sind charakterisiert durch ihre jeweiligen Verstärkungsfaktoren, Mittenfrequenzen und Güten (Bandbreiten). Die als entsprechende Filtereinheiten ausgebildeten Entzerrer haben endliche Bandbreiten, so dass ihre Zusammenschaltung unweigerlich zu Interferenzen ihrer Frequenzgänge führt. Hierdurch können erhebliche Abweichungen des Gesamtamplitudengangs der Entzerreranordnung von den vom Benutzer eingestellten Verstärkungsfaktoren (Gain Setting) entstehen. Die resultierenden Verstärkungsfaktoren können somit viel größer oder viel kleiner als die entsprechenden Werte des Gain Settings ausfallen, was eine ungewollte Verfärbung des signalspektrums und eine Erhöhung der Übersteuerungswahrscheinlichkeit mit sich bringt.

Die durch die Interferenzen hervor gerufenen Defekte können in fünf Kategorien eingeteilt werden, nämlich Verstärkungsüberhöhung, Dämpfungsüberhöhung, Verstärkungsverringerung und Dämpfungsverringerung sowie einer unspezifischen (zufälligen) Frequenzgangsverzerrung.

Eine Verstärkungsüberhöhung tritt dann auf, wenn die Verstärkungen einer Anzahl von benachbarten Entzerrern das gleiche Vorzeichen haben. In dem Fall bringt die Interferenz einen ausgeprägten Anhebungs- oder Absenkungseffekt abhängig vom Verstärkungsvorzeichen hervor. Das Frequenzverhalten der Entzerrerbank zeigt dann absolute Werte der Verstärkung, die deutlich höher sind als die Entstellungen des Benutzers. Dies kann unter Umständen sogar soweit führen, dass die hohen Verstärkungswerte in nicht tolerierbarem Frequenzgangsverzerrungen (Coloration) und/oder in einem Ansteigen der Übersteuerungswahrscheinlichkeit endet.

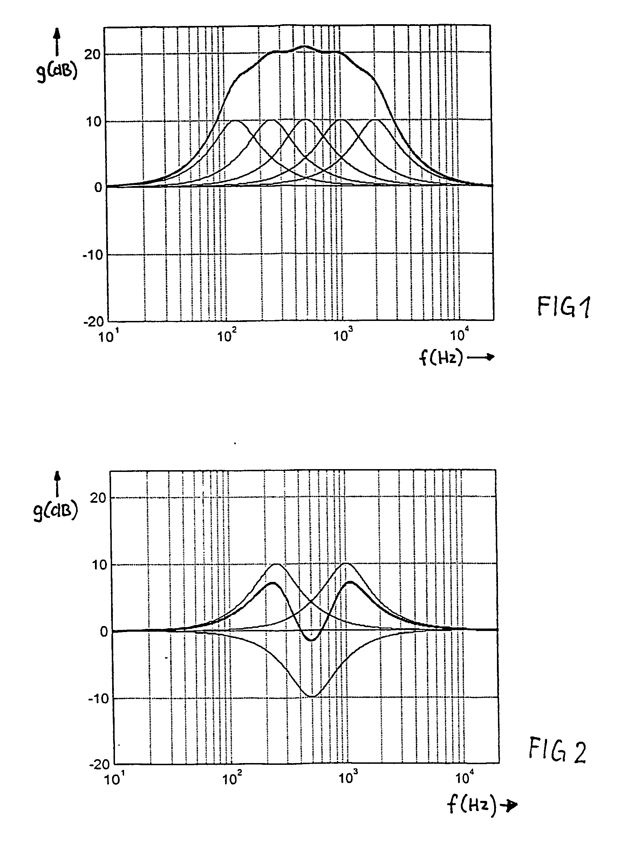

Ein solcher Effekt ist in Figur 1 dargestellt. Die Verstärkungen der fünf benachbarten Entzerrer der beispielhaft gezeigten grafischen Equalizerbank sind alle auf +10dB gesetzt; während die Verstärkungen der anderen Entzerrer auf 0dB eingestellt sind. Figur 1 zeigt dabei den Verstärkungsverlauf der einzelnen Entzerrer sowie den Gesamtverstärkungsverlauf der Entzerrerbank (dickere Linie), wobei der Verstärkungs-überhöhungseffekt deutlich hervor tritt.

In dem Fall, dass ein Absenkungsentzerrer und ein Anhebungsentzerrer einander benachbart sind, bewirkt die Interferenz der beiden eine Reduzierung des Betrags der jeweiligen Verstärkung beim jeweils anderen Entzerrer. Demzufolge ist der Gesamtverstärkungsverlauf über der Frequenz einer Entzerrerbank bestehend aus zwei Entzerrern mit gegenteiligem Verhalten eine Reduzierung des absoluten Verstärkungsbetrags beider Entzerrer im Vergleich zur Einstellung durch den Benutzer.

In Figur 2 ist dieser Effekt dargestellt. Dabei ist der Verstärkungsverlauf von drei benachbarten Entzerrern dargestellt, von denen die beiden äußeren Anhebungsentzerrer mit einer positiven Verstärkung von +10dB sind, während der mittlere ein Absenkungsentzerrer mit einer negativen Verstärkung von -10dB ist. Figur 2 zeigt darüber hinaus auch den Gesamtverstärkungsverlauf (dicke Linie) der Entzerrerbank über der Frequenz. Daraus ist zu ersehen, dass sich eine beachtliche Abnahme der Verstärkung der beiden Anhebungsentzerrer und eine fast vollständige Auslöschung des Absenkungsentzerrers ergibt aufgrund des dämpfenden Interferenzeffekts, der von seinen beiden benachbarten Entzerrern hervorgerufen wird.

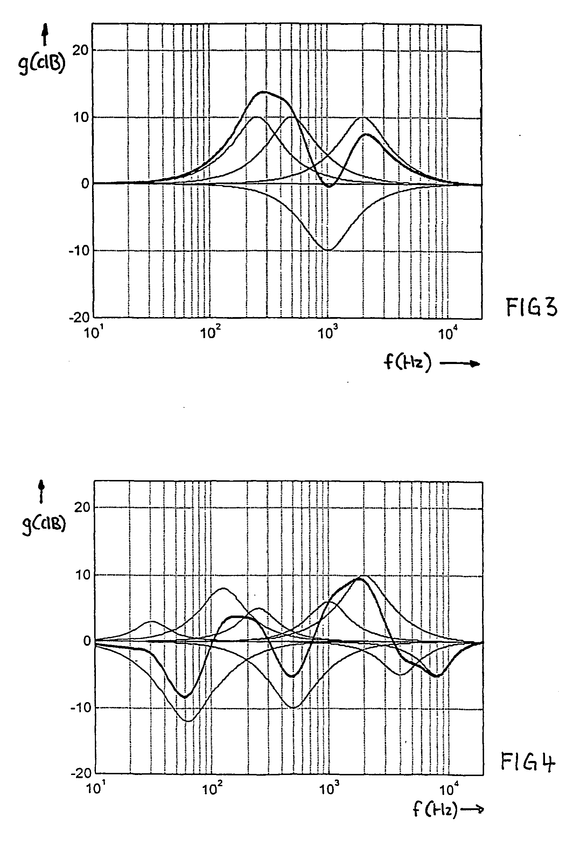

In Figur 3 ist der Fall beschrieben, in dem die beiden vorstehend genannten Effekte, d. h. sowohl eine Verstärkungsüberhöhung (wie Figur 1) als auch eine Dämpfungsabnahme (wie in Figur 2) gleichzeitig auftreten.

Für den Fall, dass die Verstärkungen der einzelnen Verzerrer in einer zufälligen Verteilung auftreten, ergibt sich auch eine zufällige Kombination von Absenkung- und Anhebungsentzerrern. Demzufolge ist auch der resultierende Verstärkungsverlauf über der Frequenz unspezifisch, also zufällig. Figur 4 zeigt die Verstärkungsverläufe der einzelnen Entzerrer bei einem Beispiel mit einer 10 Oktavbänder aufweisenden grafischen Entzerrerbank, deren einzelne Verstärkungen zufällig eingestellt sind. Der sich ergebende Gesamtverlauf der Verstärkung (dicke Linie) über der Frequenz zeigt dabei deutlich die zufällig verteilten Abweichungen der Verstärkung von den eingestellten Werten.

Um dem entgegen zu wirken, haben die Benutzer bisher versucht, die Entzerrerparameter manuell zu variieren, um den Gesamtfrequenzgang der gewünschten Einstellung anzupassen, was jedoch mit erheblichem manuellen Aufwand und zweifelhaftem Erfolg verbunden war. Im professionellen Bereich wurden dazu bestimmte Einstellungen bereits im voraus realisiert und die entsprechenden Parameter abgespeichert. Beim späteren Einsatz wurden dann die Einstellungen und somit die zugehörigen Parametersätze abgerufen und der Einstellung zugrunde gelegt. Diese Vorgehensweise ist jedoch durch eine geringe Flexibilität und eine fehlende Echtzeittauglichkeit stark eingeschränkt.

Aufgabe der Erfindung ist es daher, Entzerreranordnungen anzugeben, die nicht nur eine hohe Flexibilität und Echtzeittauglichkeit bei der Einstellung bieten, sondern auch nur einen geringen manuellen Aufwand erfordern.

Die Aufgabe wird gelöst durch eine Entzerreranordnung gemäß Patentanspruch 1. Ausgestaltungen und Weiterbildungen des Erfindungsgedankens sind Gegenstand von Unteransprüchen.

Der Erfindung liegt folglich die Idee zugrunde, die Variation und Einstellung der Entzerrerparameter zur Realisierung einer vom Benutzer gewünschten Einstellung durch eine Optimierungseinrichtung unter Verwendung beispielsweise eines echtzeittauglichen mathematischen Optimierungsverfahrens zu automatisieren. So werden beispielsweise die Parameter der einzelnen Entzerrer entsprechend einer mathematischen Optimierungsstrategie systematisch variiert. Der manuelle Einstellaufwand ist also minimal aufgrund des Einsatzes einer automatisierten Einstellprozedur.

Dabei wird bei jeder Variation eine bestimmte Optimierungsqualitätsgröße (Zielfunktion, Kostenfunktion) gebildet und beobachtet. Die Parametervariation wird in die Richtung, in der die Kostenfunktion abnimmt, fortgesetzt, bis die Kostenfunktion ein gewisses voreingestelltes Mindestniveau erreicht hat. Nach jeder Neueinstellung der Entzerrer durch den Benutzer kann beispielsweise der erwähnte mathematische Optimierungsprozess mittels einer entsprechenden Berechnungsroutine ausgeführt werden und dann der optimale Parametersatz mittels einer Einstellroutine einer Entzerrerimplementierungsroutine übergeben werden. Der tatsächlich auftretende Amplitudengang kann dabei direkt ermittelt, abgeschätzt oder simuliert werden und dann der Optimierung zugrunde gelegt werden.

Im einzelnen wird dies erreicht durch eine Entzerreranordnung der eingangs genannten Art dadurch, dass die ersten externen Steuersignale einer Optimierungseinrichtung zugeführt werden, die daraus erste interne Steuersignale zum Einstellen der Verstärkungen der Entzerrer bei den jeweiligen Mittenfrequenzen erzeugt, wobei die ersten internen Steuersignale gegenüber dem ersten externen Steuersignal derart abgeändert sind, dass die zwischen den Entzerrern auftretenden Interferenzen zumindest verringert werden. Dabei repräsentieren die ersten externen Steuersignale die vom Benutzer gewünschten Verstärkungsparameter, während die ersten internen Steuersignale die tatsächlichen zur Einstellung der Entzerrer verwendeten Verstärkerparametersätze darstellen.

Weiterhin kann vorgesehen werden, dass der Optimierungseinrichtung zur Steuerung der Mittenfrequenz und/ oder der Güte der Entzerrer vorgesehene zweite bzw. dritte externe Steuersignale zugeführt werden. Auf diese Weise lassen sich neben grafischen Entzerreranordnungen auch parametrische Entzerreranordnungen realisieren.

Darüber hinaus kann die Optimierungseinrichtung auch zweite interne Steuersignale zum Ändern der Mittenfrequenzen der Entzerrer erzeugen. Diese Signale werden auf alle Fälle in Verbindung mit den zweiten externen Steuersignalen benötigt, können aber auch ohne diese eingesetzt werden, um einen optimalen Frequenzverlauf der gesamten Entzerreranordnung zu schaffen.

Des weiteren kann die Optimierungseinrichtung dritte interne Steuersignale zur Steuerung der Güte der Entzerrer erzeugen. Neben Mittenfrequenz und Verstärkung ist die Güte ein alternativer oder zusätzlicher Parameter, um zu dem vom Benutzer voreingestellten Frequenzverlauf zu gelangen.

Vorzugweise bedient sich die Optimierungseinrichtung eines Fehlerminimierungsverfahrens, insbesondere eines nicht linearen Fehlerminimierungsverfahrens, wobei als Fehler die auftretenden Interferenzen zugrunde gelegt werden. Dieses Fehlerminimierungsverfahren arbeitet bevorzugt iterativ. Auf diese Weise wird eine schnelle Annäherung an den optimalen, vom Benutzer vorgegebenen Frequenzverlauf erzielt.

Die Erfindung wird nachfolgend anhand der in den Figuren der Zeichnung dargestellten Ausführungsbeispiele näher erläutert. Es zeigt:

Figur 1    den Frequenzverlauf einer Entzerrerbank mit ausgeprägter Verstärkungsüberhöhung,

Figur 2    den Frequenzverlauf einer Entzerrerbank mit ausgeprägter Dämpfungsabnahme,

Figur 3    den Frequenzverlauf einer Entzerrerbank mit gleichzeitiger-Verstärkungsüberhöhung und Dämpfungsverringerung,

Figur 4    den Frequenzverlauf einer Entzerrerbank mit einer zufälligen Einstellung,

Figur 5    eine erste Ausführungsform einer erfindungsgemäßen Entzerreranordnung als grafische Entzerrerbank mit serieller Struktur,

Figur 6    eine zweite Ausführungsform einer erfindungsgemäßen Entzerreranordnung als parametrische Entzerrerbank mit parallele Struktur,

Figur 7    den optimierten Frequenzverlauf bei der Entzerrerbank nach Figur 1,

Figur 8        den optimierten Frequenzgang der Entzerrerbank nach Figur 2,

Figur 9        den optimierten Frequenzgang der Entzerrerbank nach Figur 3 und

Figur 10       den optimierten Frequenzgang der Entzerrerbank nach Figur 4.

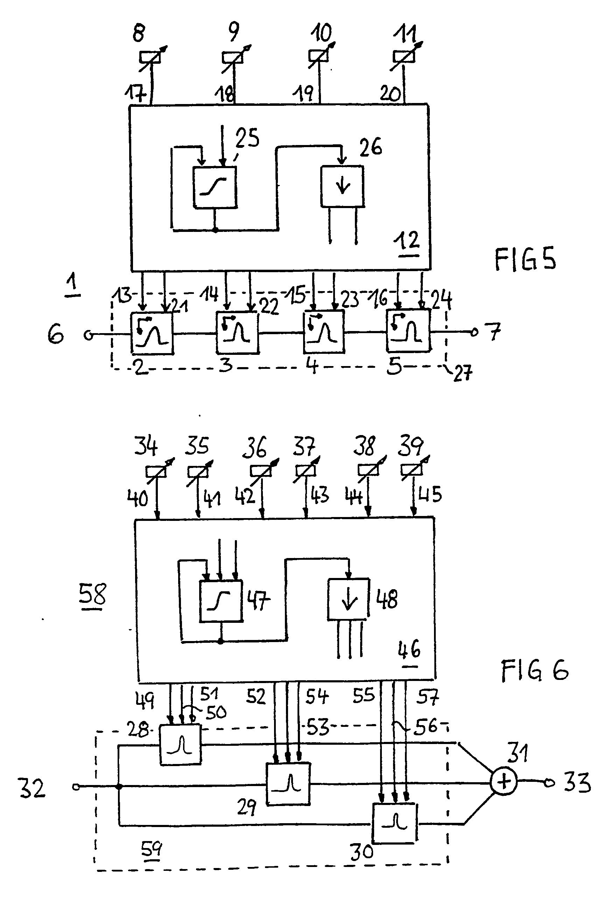

Bei dem in Figur 5 gezeigten Ausführungsbeispiel einer erfindungsgemäßen Entzerreranordnung wird von einer grafischen Entzerrerbank 1 mit fest vorgegebenen Mittenfrequenzen und Güten ausgegangen, die vier einzelne Entzerrer 2 bis 5 aufweisen. Die Entzerrer 2 bis 5 sind dabei in Reihe geschaltet und werden von einem Eingangssignal 6 gespeist, das entsprechend entzerrt als Ausgangssignal 7 am Ausgang des letzten Entzerrers 5 bereit steht.

Weiterhin sind Regler 8 bis 11 vorgesehen, mit deren Hilfe ein Benutzer einen gewünschten Frequenzgang vorgibt, indem er die Verstärkungen der einzelnen Entzerrer 2 bis 5 bei deren jeweiligen Mittenfrequenzen festlegt. Die vom Benutzer vorgegebenen Einstellungen (Gain Setting) werden aber nicht wie üblich direkt den Entzerrern 2 bis 5 zugeführt, sondern werden zunächst an eine Optimierungseinrichtung 12 weitergeleitet, die dann entsprechende erste interne Steuersignale 13 bis 16 aus den von den Reglern 8 bis 11 bereitgestellten ersten externen Steuersignalen 17 bis 20 erzeugt. Anhand der internen Steuersignale 13 bis 16 werden dann nach Vorgabe der Optimierungseinrichtung 12 die Verstärkungsfaktoren bei den Mittenfrequenzen der Entzerrer 2 bis 5 eingestellt.

In Weiterbildung der Erfindung wird abhängig von den an den Reglern 8 bis 11 getätigten Einstellungen durch die Optimierungseinrichtung 12 zudem auch die Güte der Entzerrer 2 bis 5 verändert. Dies erfolgt durch die internen Steuersignale 21 bis 24. Damit lässt sich noch genauer der tatsächliche Amplitudengang der Filterbank 1 an die vom Benutzer vorgegebene Einstellung anpassen.

Die Optimierungseinrichtung 12 bedient sich eines echtzeittauglichen mathematischen Optimierungsverfahrens, bei dem die Parameter der einzelnen Entzerrer iterativ entsprechend einer vorgegebenen Optimierungsstrategie systematisch variiert werden bis die optimale Einstellung gefunden ist. Dabei wird nach jeder Parameter-Variation eine bestimmte Optimierungs-Qualitätsgröße (Zielfunktion, Kostenfunktion) gebildet und ausgewertet. Die Parametervariation wird in die Richtung, in der die Kostenfunktion abnimmt fortgesetzt, bis die Kostenfunktion ein gewisses voreingestelltes Mindestniveau erreicht hat.

Die Optimierung erfolgt beispielsweise mittels eines nichtlinearen Optimierungsverfahrens, das in einer Recheneinheit 25 durchgeführt wird. Nach jeder Neueinstellung der Entzerreranordnung 1 durch den Benutzer wird der erwähnte mathematische Optimierungsprozess ausgeführt und der optimale Parametersatz mittels einer in einer Recheneinheit 26 ausgeführten Einstellroutine einer Entzerrerimplementierungsroutine übergeben, wobei die Recheneinheiten 25 und 26 ein und dieselbe sein können. Die Implementierungsroutine kann beispielsweise in einer weiteren Recheneinheit 27 ausgeführt werden (oder aber auch in den Recheneinheiten 25 oder 26).

In Figur 6 ist eine andere Ausführungsform einer erfindungsgemäßen Entzerreranordnung dargestellt, wobei hier eine parametrische Entzerrerbank dargestellt ist. Die Entzerrerbank 27 umfasst drei einzelne Entzerrer 28, 29 und 30, die in paralleler Struktur mittels eines Addierers 31 miteinander verschaltet sind. Dazu ist ein Eingangssignal 32 gleichzeitig an alle drei Entzerrer 28, 29, 30 angelegt, deren Ausgänge auf den Addierer 31 geführt sind. Am Ausgang des Addierers 31 ist dann das durch Entzerrung aus dem Eingangssignal 32 hervorgehende Ausgangssignal 33 abgreifbar.

Der vom Benutzer gewünschte Amplitudengang der Entzerreranordnung 58 wird mittels sechs Reglern 34 bis 39 vom Benutzer eingestellt. Die sechs Regler sind in drei Gruppen aufgeteilt, wobei eine Gruppe jeweils einem der Entzerrer 28, 29, 30 zugeordnet ist. Innerhalb einer Gruppe ist jeweils ein Regler 34, 36, 38 zur Einstellung der jeweiligen Mittenfrequenz vorgesehen, während der jeweils andere Regler 35, 37, 39 zur Einstellung der Verstärkung bei dieser Mittenfrequenz dient. Die Regler 34 bis 39 erzeugen dabei erste externe Steuersignale 41, 43, 45 zur Steuerung der Verstärkung und zweite externe Steuersignale 40, 42, 44 zur Steuerung der Mittenfrequenzen. Diese Signale werden einer Optimierungseinrichtung 46 zugeführt, die entsprechend der Optimierungseinrichtung 12 aus Figur 5 ebenfalls eine erste und zweite Recheneinrichtung 47, 48 aufweist. Zudem ist eine Recheneinrichtung 59 vorgesehen zur Durchführung einer Implementierungsroutine und damit zur Steuerung der Entzerrer 28, 29, 30. Mit den beiden Recheneinrichtungen 47 und 48 werden wiederum entsprechend Optimierungsroutinen und Einstellroutinen abgearbeitet.

Des weiteren können auch noch dritte externe Steuersignale zur Einstellung der Güte durch den Benutzer vorgesehen werden, die ebenfalls der Optimierungseinrichtung 46 zugeführt werden und die folglich der Optimierung zugrunde gelegt werden. Diese sind jedoch der größeren Übersichtlichkeit halber beim vorliegenden Ausführungsbeispiel nicht dargestellt.

Die Optimierungseinrichtung 46 erzeugt zumindest erste 49, 52, 55 und zweite 50, 53, 56 interne Steuersignale zur Einstellung von Mittenfrequenz- und Verstärkung bei den Entzerrern 28, 29, 30 sowie darüber hinaus in Weiterbildung der Erfindung (falls erforderlich) auch dritte interne Steuersignale 51, 54, 57 zur Steuerung der Güte.

Im folgenden wird nun die Arbeitsweise der Optimierungseinrichtungen 12 und 27 im allgemeinen dargelegt als Verfahren zur Lösung eines nichtlinearen Optimierungsproblems im allgemeinen und als nichtlineare Kurvenanpassung im besonderen. Im Sinne einer Kurvenanpassung lassen sich nämlich die Verstärkungsvorgaben des Benutzers als Abtastwerte eines gewünschten Amplitudengangs interpretieren, der mittels einer sogenannten Modellfunktion anzunähern ist.

Es sei zunächst eine Entzerrerbank bestehend aus einer bestimmten Anzahl von hintereinander geschalteten Entzerrern, beispielsweise gemäß Figur 5 betrachtet. Dabei wird davon ausgegangen, dass die Verstärkungen (in dB) der einzelnen Entzerrer bei ihren jeweiligen Mittenfrequenzen fest vorgegeben sind. Des weiteren werden bestimmte gewünschte Verstärkungen der Entzerrerbank bei einigen bedeutenden mittleren Frequenzen angenommen, und zwar eine zwischen zwei jeweils - benachbarten Mittenfrequenzen.

Als Datensatz für eine Kurvenanpassung werden dabei die Verstärkungen bei den Mittenfrequenzen und jene bei den dazwischen liegenden Frequenzen angenommen. Als eine Kurvenanpassungsfunktion (Modellfunktion) wird die Summe der Logarithmen der formal ausgedrückten Amplitudengänge (in dB) der einzelnen Entzerrer verwendet mit noch unbekannten Parametern: Verstärkung, Güte und Mittenfrequenz.

Als nächstes erfolgt dann die Auswahl eines geeigneten Optimierungsverfahrens (Kurvenanpassungsverfahrens bzw. Minimierungsverfahrens), das dem gestellten Problem gerecht wird.

Beispielsweise bei D. A. Pierre, "Optimization Theory With Applications", Jon Wiley and Sons, New York 1969, sind zahlreiche iterative Optimierungstechniken wie beispielsweise Newton-Verfahren, Gradientenverfahren und Koordinatenaustauschverfahren beschrieben. Im Hinblick auf eine Echtzeitimplementierung wird beim vorliegenden Fall auf ein Koordinatenaustauschverfahren zurückgegriffen, da dieses von relativ geringer Komplexität ist. Es können aber in gleicher Weise aber auch dazu alternative Optimierungsverfahren angewandt werden.

Des weiteren wird ein Maß für die Qualität der Kurvenanpassung (Norm) benötigt. Hierfür kommt beispielsweise die Euklidische Norm in Frage, d. h. die Wurzel aus dem Quadratsummenmaß, also die Wurzel aus der Summe der Quadrate aller Abweichungen der Modellfunktion von den Datenpunkten und damit die Wurzel aus der Summe aller quadrierten Fehler. Ferner werden noch eine Iterationsendebedingung und schließlich geeignete Anfangswerte für die unbekannten Parameter definiert. Hiernach erst wird mit dem Kurvenanpassverfahren begonnen und dieses bis zum Auftreten der Iterationsendebedingung in einer Iterationsschleife betrieben.

Als Satz von Datenpunkten, die der Kurvenanpassung unterzogen werden sollen, werden die N benutzerdefinierten Verstärkungen (in dB) $G_i$ mit I = 1,2,...,N bei den korrespondierenden Mittenfrequenzen $F_{ci}$ mit I = 1,2,...,N und zusätzlich N-1 in geeigneter Weise vorhergesagte und gewünschte Verstärkungen (in dB) $G_{mi}$ mit I = 1,2,...N-1 jeweils bei einer günstig ausgewählten Zwischenfrequenz $F_{mi}$ mit I = 1,2,...,N definiert.

Es ergeben sich dann 2N-1 Datenpunkte, die als Elemente eines Datenpunktvektors angenommen werden können:

$$\bar{y}^T = (\widetilde{G}_1, \widetilde{G}_2, ... \widetilde{G}_{2N-1}),$$

$$\widetilde{G}_{2i-1} = G_i, \; i = 1,2,...,N; \; \widetilde{G}_{2i} = G_{mi}, \; i = 1,2,...,N-1$$

mit dem Vektor für die zugehörigen Frequenzpunkte

$$\bar{x}^T = (\widetilde{F}_1, \widetilde{F}_2, ... \widetilde{F}_{2N-1}),$$

$$\widetilde{F}_{2i-1} = F_{ci}, \quad i = 1,2,...,N; \quad \widetilde{F}_{2i} = F_{mi}, \quad i = 1,2,...,N-1$$

Der Datenpunktvektor wird auch dazu verwendet, bei jedem Iterationsschritt das Qualitätsmaß für die Kurvenanpassung zu ermitteln durch Berechnung der Euklidischen Distanz dieses Vektors von dem korrespondierenden Vektor der Werte, die sich aus der nachfolgend beschriebenen Modellfunktion ergeben.

Zur Bildung der Modellfunktion sei eine Entzerrerbank mit N in Reihe geschalteten (der Einfachheit der Darstellung halber herkömmlichen analogen) Entzerrern mit den unbekannten Parametermittenfrequenzen $Fc_i$, Verstärkungen $G_i$ (in dB) mit $G_i$ = 20 LOG ($A_i$) und den Güten $Q_i$ mit i = 1,2,...,N betrachtet. Jeder einzelne Entzerrer hat dabei die Übertragungsfunktion im Frequenzbereich.

$$H_i(f) = \frac{1-(f/Fc_i)^2 + j(A_i/Q_i)(f/Fc_i)}{1-(f/Fc_i)^2 + j(1/Q_i)(f/Fc_i)}, \quad i = 1,2,...,N$$

und hieraus die logarithmische Amplitudengang-Funktion (in dB)

$$Me_i(f) = 10\log\left\{\left[1-(f/Fc_i)^2\right]^2 + (A^2{}_i/Q^2{}_i)(f/Fc_i)^2\right\}$$
$$- 10\log\left\{\left[1-(f/Fc_i)^2\right]^2 + (1/Q^2{}_i)(f/Fc_i)^2\right\}$$

Als Modellfunktion M(p, f) für unser Kurvenanpassproblem wird von dem Gesamtamplitugengang (in dB) der Entzerrerbank (bestehend aus N einzelnen Entzerrern) ausgegangen:

$$M(\overline{p}, f) = \sum_{i=1}^{N} Me_i(Fc_i, G_i, Q_i, f)$$

mit dem unbekannten Parametervektor

$$\overline{p}^T = (Fc_1, G_1, Q_1, \ ... \ Fc_N, G_N, Q_N)$$

Mit dieser Funktion wird nun die Kurvenanpassung basierend auf den Satz von Datenpunkten (Datenpunktvektor) wie oben angegeben durchgeführt.

Als Maß für die Qualität der Kurvenanpassung bei jedem Iterationsschritt wird das bekannte Quadratsummen-maß angewandt:

$$D(\overline{p}) = \sum_{i=1}^{2N-1} \left[M(\overline{p}, f = \tilde{F}_i) - \tilde{G}_i\right]^2$$

Im Zusammenhang mit Optimierungen wird dieses Maß auch häufig als Kostenfunktion bezeichnet. In der Theorie mathematischer Optimierungen wird es häufig als das Maß charakterisiert, das auf der sogenannten L2-Norm basiert. Alternative Normen wie beispielsweise die Minimax-Norm können ebenso angewendet werden.

Im Hinblick auf eine Vektorraum-Beschreibung des vorliegenden Problems können die variablen Parameter als unabhängige Koordinaten eines Vektorraums angenommen werden. Jeder beliebige Parametervektor deutet auf einen Punkt in diesem Raum. Jeder Punkt in diesem Raum wird dann in eine positive Zahl umgewandelt, nämlich die Euklidische Distanz (das Kurvenanpassungsmaß), durch die Modellfunktion in Verbindung mit der Kostenfunktion. Dabei soll ein Punkt des Parameterraums gesucht werden, der die kürzeste Euklidesche Distanz im vereinfachten Sinne aufweist.

Das zu lösende Problem der Interferenzkompensation kann dabei als ein nichtlineares Minimierungsproblem nach der Methode der kleinsten Fehlerquadrate angesehen werden. Nichtlinear deshalb, weil die Modellfunktion ebenso wie die Kostenfunktion nicht linear von den Parametern abhängt. Gesucht ist also der optimale Parametervektor $p_0$, der die Kostenfunktion D(p) minimiert:

$$Minimize\ D(\overline{p})!$$

$$with\ some\ \overline{p}_o = (Fc_{1o}, G_{1o}, Q_{1o}, \dots, Fc_{No}, G_{No}, Q_{No})$$

Nichtlineare Minimierungsprobleme werden in den meisten Fällen durch Verwendung eines numerischen iterativen Verfahrens gelöst. Ein wichtiges, grundlegendes Problem bei allen nichtlinearen Optimierungsverfahren ist die Tatsache, dass die Kostenfunktion nicht ein einziges globales Minimum, sondern verschiedene lokale Minima aufweisen kann. Dies ist auch bei den vorliegenden Anwendungen zu berücksichtigen.

Wie bereits erwähnt ist es wichtig, einen oder den einzigen optimalen Parametervektor zu finden, welcher die Kostenfunktion minimiert. Um dieses Ziel zu erreichen, sind zunächst einmal eine geeignete, schnell suchende Minimierungs-Strategie festzulegen, die Bedingung für das Iterationsende zu definieren und geeignete Anfangswerte der Parameter für die erste Iterationsrunde festzulegen.

Im Stand der Technik sind zahlreiche Minimierungsverfahren beschrieben, die im wesentlichen in drei Kategorien eingeteilt werden können, nämlich Newton-Verfahren, GradientenVerfahren und Koordinaten-Austauschverfahren.

Die Koordinatenaustauschverfahren sind langsam, haben aber vorteilhafter Weise eine verhältnismäßig geringe Komplexität. Aus diesem Grund soll für die weiteren Betrachtungen dieses Verfahren angewendet werden.

Das Verfahren kann folgendermaßen kurz umschrieben werden. Bei jedem Iterationsschritt werden die Parameter, einer nach dem anderen, erhöht und dann erniedrigt um einen gewissen Betrag. Nach Veränderung eines jeden Parameters wird die Modellfunktion berechnet und hieraus die Kostenfunktion unter Verwendung des zeitweise veränderten Parameters. Hiernach wird geprüft, ob die Parameteränderungen die Kostenfunktion erhöhen oder erniedrigen. Für den Fall, dass die Kostenfunktion erniedrigt wird, wird der jeweilige Parameter entsprechend dem positiven oder negativen Betrag eingestellt oder andernfalls unverändert belassen. Danach wird in gleicher Weise der nächste Parameter verändert und dabei abhängige Kostenfunktion ermittelt.

Nachdem alle Parameter in dieser Weise durchlaufen wurden, wird die Iterationsschleife wiederholt unter Verwendung des neuen Parametervektors so oft bis die Iterationsendebedingung erfüllt wird. Ist dies der Fall, dann wird das Iterationsverfahren beendet.

Bevor jedoch das Iterationsverfahren gestartet wird, müssen geeignete Anfangswerte der unbekannten Parameter für den ersten Iterationslauf festgelegt werden. Bei nichtlinearen Optimierungsverfahren im allgemeinen ist diese Aufgabe ein verhältnismäßig problematischer Schritt, da ein schlecht gewählter Erstparametersatz im schlimmsten Fall in einer Divergenz des Algorithmus endet. Deshalb müssen die Anfangswerte sehr sorgfältig ausgewählt werden, um den Iterationsprozess (mindestens) auf ein (lokales) Minimum so schnell wie möglich konvergieren zu lassen.

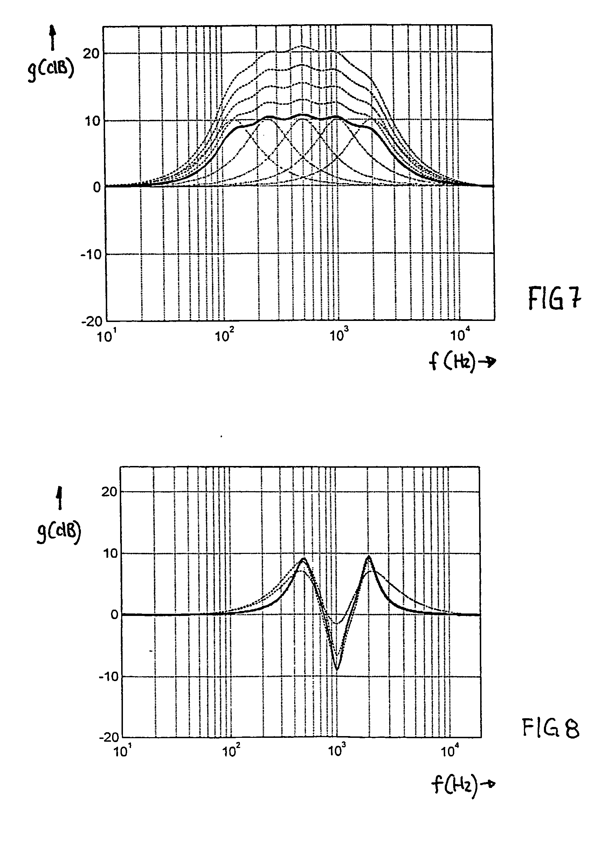

Die erfindungsgemäße Entzerreranordnung kann in Verbindung sowohl mit grafischen als auch mit parametrischen Entzerrerbänken mit beliebiger Anordnungsstruktur eingesetzt werden. Zur Erläuterung wird bei den in den Figuren 7 bis 10 dargestellten Ausführungsbeispielen der Einfachheit halber von einer grafischen Equalizerbank mit 10 Oktavbändern ausgegangen. Als variabler Parametervektor der Modellfunktion werden in diesem Fall die Verstärkungen und Güten der einzelnen Entzerrer hergenommen. Für die nachfolgenden Betrachtungen sollen dabei die Mittenfrequenzen fest sein, d. h. sie werden nicht als Elemente des Parameterwechsels verwendet. Darüber hinaus werden im vorliegenden Fall als Anfangsparameterwerte die korrespondierenden Einstellungen des Benutzers zugrunde gelegt.

Als Elemente des Parametervektors werden folglich die Verstärkungen und die Güten der einzelnen Entzerrer verwendet, die das System der Koordinaten für den Raum, über den die Suche nach dem Minimum der Kostenfunktion erfolgt, bilden. Das Koordinatenaustauschverfahren, das hierbei eingesetzt werden soll, arbeitet dabei wie folgt:

Es stehen, wie bereits erwähnt, unterschiedliche Typen von Parametern zur Verfügung, nämlich die Verstärkungen und die Güten, die beide verändert werden könnten, um das Optimum zu erreichen. Zunächst wird beispielsweise das Optimierungsverfahren nur mit Verstärkungsänderungen durchgeführt und anschließend das Verfahren mit den Güten wiederholt. Zu Beginn der Verstärkungs- und Güteoptimierung wird eine Iterationsendebedingung festgelegt.

Bei jedem Iterationsschritt wird beispielsweise mit einer Erhöhung begonnen gefolgt von einer Erniedrigung der Verstärkungen (bzw. der Güten) und zwar eine Verstärkung (bzw. Güte) nach der anderen um einen bestimmten Betrag. In dieser Weise also wird der Parametervektor variiert, ein Element nach demanderen, und bei jeder Elementenvariation der Gesamtfrequenzgang berechnet oder geschätzt, woraus die Kostenfunktion errechnet und gegenüber einer Iterationsendebedingung geprüft wird. Die Iterationsschleife wird sobald die Endebedingung erfüllt ist, gestoppt, was bedeutet, dass der optimale Punkt erreicht ist. Andernfalls wird die Schleife fortgesetzt.

Die Unterschiede im Amplitudengang mit und ohne Optimierung sind in den Figuren 1 und 7 einander gegenüber gestellt. Dort ist als anfänglicher Parametersatz die Einstellung des Benutzers zugrunde gelegt, von der auch Figur 1 ausgeht. Um die ausgeprägten Verstärkungsüberhöhungen zu reduzieren, wurden dabei nur die Verstärkungen (wie oben beschrieben iterativ) verändert. Das Ergebnis ist in Figur 5 zu ersehen, wobei punktierte Linien Zwischenergebnisse darstellen und durchgezogene Linien das endgültige Ergebnis repräsentieren. Die Schrittweite für die Verstärkung war dabei 1 dB und zufriedenstellende Ergebnisse wurden bereits nach vier Iterationsrunden erhalten.

Ausgehend von dem Ausführungsbeispiel nach Figur 2 wird gemäß Figur 8 versucht, die Interferenzeffekte nur durch Verändern der Güte zu kompensieren. Die Güten wurden dabei im Bereich zwischen 1,4 und 2,6 bzw. zwischen 0,8 und 1,4 verändert. Wie zu ersehen ist, wurden dabei die Verstärkungseinstellungen des Benutzers im wesentlichen ohne Abweichung erreicht.

Bei dem komplexeren Ausführungsbeispiel nach Figur 3 werden zu dessen Optimierung sowohl Verstärkungsvariationen als auch Gütevariationen herangezogen. Die Verstärkungsschritte waren dabei auf 0,5 dB gesetzt. Das Optimierungsverfahren konvergiert dabei auf eine Gesamtamplitudengang (nicht gezeigt), die wie erwartet stellenweise weit von der eigentlichen Verstärkungseinstellung durch den Benutzer abweicht. Die ebenfalls nicht gezeigte korrespondierende Kostenfunktion gleitet in einen minimalen Wert, der sich durch weitere Iterationsschleifen nicht weiter verringern lässt. Mit einer Verstärkungsvariation alleine kann also eine Kurvenanpassung (Interferenzkompensation) nicht befriedigend gelöst werden.

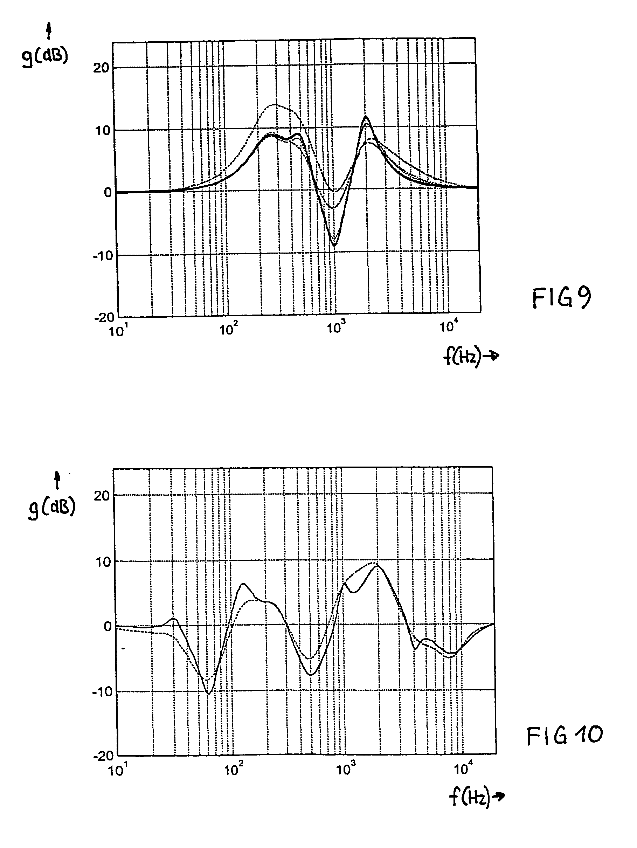

In Figur 9 sind die Ergebnisse des Gesamtamplitudengangs (gepunktete Linie: Zwischenergebnisse, durchgezogene Linie: Endergebnisse) dargestellt, wobei neben einer Verstärkungsvariation auch eine Gütevariation beim Optimierungsverfahren zum Einsatz kommt. Beim vorliegenden Beispiel erhält man einen akzeptablen Gesamtamplitudengang nach drei Verstärkungsiterationen und acht Güteiterationen.

Schließlich wurde das Optimierungsverfahren mit kombinierter Verstärkungs- und Gütevariation bei der in Figur 4 gezeigten Einstellung angewandt. Der resultierende Gesamtamplitudengang ist in Figur 8 (durchgezogene Linie) dargestellt in Vergleich zum ursprünglichen, nicht optimierten Gesamtamplitudengang (gestrichelte Linie) aus Figur 4. Zum Zwecke größerer Übersichtlichkeit sind dabei die Zwischenresultate nicht dargestellt.

Somit konnte gezeigt werden, dass die Optimierungseinrichtung ein tatsächliches Übertragungsverhalten einstellt, das im wesentlichen dem vom Benutzer eingestellten entspricht. Die Erfindung ist aber nicht nur auf iterative Systeme beschränkt, sondern kann auch durch neuronale Netze oder durch Fuzzy Logic realisiert werden.

2     Entzerrer

34    Regler

**Patentansprüche**

1. Entzerreranordnung zum Erzeugen eines Ausgangseignals (7, 33) durch Entzerren eines Eingangssignals (6, 32) mit mindestens zwei miteinander verschalteten und miteinander interferierenden Entzerrern (2 bis 5, 28 bis 30), die unterschiedliche Mittenfrequenzen aufweisen und deren Verstärkungen bei den jeweiligen Mittenfrequenzen durch erste externe Steuersignale (17 bis 20; 41, 43, 45) steuerbar sind, wobei das Eingangssignal abhängig von den externen Steuersignalen entzerrt wird, wobei
die ersten externen Steuersignale (17 bis 20; 41, 43, 45) einer Optimierungseinrichtung (12, 46) zugeführt, werden, die daraus erste interne Steuersignale (13 bis 16; 49, 52,55) zum Einstellen der Verstärkungen der Entzerrer (2 bis 5, 28 bis 30) bei den jeweiligen Mittenfrequenzen erzeugt, **dadurch gekennzeichnet, dass**
die ersten internen Steuersignale (13 bis 16; 49, 52, 55) gegenüber den ersten externen Steuersignalen (17 bis 20; 41, 43, 45) derart eingestellt werden, dass ein auf Verstärkungsvorgaben anhand der ersten externen Steuersignale beruhender Amplitudengang durch eine Modellfunktion angenähert wird, indem iterativ eine Optimierung erfolgt, bei der eine Norm als Maß für die Qualität der Annäherung optimiert und so die Modell- funktion an den vorgegebenen Amplitudengang angepasst wird.

2. Entzerreranordnung nach Anspruch 1, **dadurch gekennzeichnet, dass**
der Optimierungseinriehtung (12, 46) zur Steuerung der Mittenfrequenz der Entzerrer vorgesehene zweite externe Steuersignale (40, 42, 44) zugeführt werden.

3. Entzerreranordnung nach Anspruch 1 oder 2, **dadurch gekennzeichnet, dass**
die Optimierungseinrichtung (12, 46) zweite interne Steuersignale (50, 53, 56) zum Ändern der Mittenfrequenz oder Entzerror (28 bis 30) erzeugt.

4. Entzerreranordnung nach einem der vorherigen Ansprüche, **dadurch gekennzeichnet, dass**
die Optimierungseinrichtung (46) dritte interne Steuersignale (51, 54, 57) zur Steuerung der Güte der Entzerrer (28 bis 30) erzeugt.

5. Entzerreranordnung nach einem der vorherigen Ansprüche, **dadurch gekennzeichnet, dass** die Optimierungseinrichtung (12, 46) ein Fehlerminimierungsverfahren durchführt, wobei als Fehler die auftretenden Interferenzen zugrunde gelegt werden.

6. Entzerreranordnung nach Anspruch 5, **dadurch gekennzeichnet, dass** das von der Optimierungseinrichtung (12, 46) durchgeführte Fehlerminimierungsverfahren ein nichtlineares Fehlerminimierungsverfahren ist.

7. Entzerreranordnung nach Anspruch 5 oder 6, **dadurch gekennzeichnet, dass** das von der Optimierungseinrichtung (12, 46) durchgeführte Fehlerminimierungsverfahren iterativ arbeitet.

8. Entzerreranordnung nach einem der vorherigen Ansprüche, **dadurch gekennzeichnet, dass** dritte externe Steuersignale zur Einstellung der Güte der Entzerrer durch den Benutzer vorgesehen sind.

## Claims

1. An equaliser system for producing an output signal (7, 33) for equalising an input signal (6, 32) including at least two equalisers (2-5, 28-30), which are connected together and interfere with one another and which have different centre frequencies and whose amplifications at the respective centre frequencies are controllable by first external control signals (17-20; 41, 43, 45), wherein the input signal is equalised in dependence on the external control signals, wherein the first external control signals (17-20; 41; 43; 45) are supplied to an optimisation device (12, 46), which produces from them first internal control signals (13-16; 49, 52, 55) for adjusting the amplification of the equalisers (2-5, 28-30) at the respective centre frequencies, **characterised in that** the first internal control signals (13-16; 49, 52, 55) are adjusted with respect to the first external control signals (17-20; 41, 43, 45) such that an amplitude response based on amplification specifications on the basis of the first external control signals is approached by a model function by an optimisation occurring iteratively, in which a norm as a measure for the quality of the approach is optimised and the model function is thus matched to the predetermined amplitude response.

2. An equaliser system as claimed in claim 1, **characterised in that** the provided second external control signals (40, 42, 44) are supplied to the optimisation device (12, 46) for controlling the centre frequency of the equalisers.

3. An equaliser system as claimed in claim 1 or two, **characterised in that** the optimisation device (12, 46) produces second internal control signals (50, 53, 56) for altering the centre frequency of the equalisers (28-30).

4. An equaliser system as claimed in one of the preceding claims, **characterised in that** the optimisation device (46) produces third internal control signals (71, 54, 57) for controlling the performance of the equalisers (28-30).

5. An equaliser system as claimed in one of the preceding claims, **characterised in that** the optimisation device (12, 46) performs an error minimisation process, wherein the interference which occurs and constitutes the errors is used as the basis.

6. An equaliser system as claimed in claim 5, **characterised in that** the error minimisation process performed by the optimisation device (12, 46) is a non-linear error minimisation process.

7. An equaliser system as claimed in claim 5 or 6, **characterised in that** the error minimisation process performed by the optimisation device (12, 46) operates iteratively.

8. An equaliser system as claimed in one of the preceding claims, **characterised in that** third external control signals for adjusting the performance of the equalisers are provided by the user.

## Revendications

1. Dispositif d'égalisation permettant de produire un signal de sortie (7, 33) par égalisation d'un signal d'entrée (6, 32), comprenant au moins deux égaliseurs interconnectés et interférant l'un avec l'autre (2 à 5, 28 à 30), qui présentent différentes fréquences centrales et dont les amplifications sont réglables grâce à des premiers signaux de commande externes (17 à 20 ; 41, 43, 45) pour les fréquences centrales respectives, dans lequel le signal d'entrée est égalisé en fonction des signaux de commande externes, dans lequel les premiers signaux de commande externes (17 à 20 ; 41, 43, 45) sont amenés à un système d'optimisation (12, 46), qui produit à partir de ceux-ci des premiers signaux de commande internes (13 à 16 ; 49, 52, 55) pour le réglage des amplifications des égaliseurs (2 à 5, 28 à 30) pour les fréquences centrales respectives,

**caractérisé en ce que**

les premiers signaux de commande internes (13 à 16 ; 49, 52, 55) sont réglés vis-à-vis des premiers signaux de commande externes (17 à 20 ; 41, 43, 45) de manière à s'approcher d'une réponse en amplitude reposant sur des données d'amplification définies au préalable à l'aide des premiers signaux de commande externes en réalisant une optimisation par une méthode itérative, au cours de laquelle une norme est optimisée en tant que mesure de la qualité du rapprochement et la fonction de modèle est ainsi adaptée à la réponse en amplitude déterminée au préalable.

**2.** Dispositif d'égalisation selon la revendication 1, **caractérisé en ce que** des deuxièmes signaux de commande externes prévus (40, 42, 44) sont amenés au système d'optimisation (12, 46) pour le réglage de la fréquence centrale des égaliseurs.

**3.** Dispositif d'égalisation selon la revendication 1 ou 2, **caractérisé en ce que** le système d'optimisation (12, 46) produit des deuxièmes signaux de commande internes (50, 53, 56) pour modifier la fréquence centrale des égaliseurs (28 à 30).

**4.** Dispositif d'égalisation selon l'une des revendications précédentes, **caractérisé en ce que** le système d'optimisation (46) produit des troisièmes signaux de commande internes (51, 54, 57) pour régler la qualité des égaliseurs (28 à 30).

**5.** Dispositif d'égalisation selon l'une des revendications précédentes, **caractérisé en ce que** le système d'optimisation (12, 46) réalise un procédé de réduction du risque d'erreurs, où les interférences qui apparaissent sont prises pour base à titre d'erreurs.

**6.** Dispositif d'égalisation selon la revendication 5, **caractérisé en ce que** le procédé de réduction du risque d'erreurs réalisé par le système d'optimisation (12, 46) est un procédé de réduction du risque d'erreurs non linéaire.

**7.** Dispositif d'égalisation selon la revendication 5 ou 6, **caractérisé en ce que** le procédé de réduction du risque d'erreurs réalisé par le système d'optimisation (12, 46) fonctionne de manière itérative.

**8.** Dispositif d'égalisation selon l'une des revendications précédentes, **caractérisé en ce que** des troisièmes signaux de commande externes sont prévus pour le réglage de la qualité des égaliseurs par l'utilisateur.

FIG 1

FIG 2

FIG 3

FIG 4

FIG 5

FIG 6

FIG 7

FIG 8

FIG 9

FIG 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 5841810 A

**In der Beschreibung aufgeführte Nicht-Patentliteratur**

• **D. A. PIERRE.** Optimization Theory With Applications. Jon Wiley and Sons, 1969